# EUROPÄISCHE PATENTSCHRIFT

(11) **EP 2 536 290 B1**
(45) Veröffentlichungstag und Bekanntmachung des Hinweises auf die Patenterteilung: **30.03.2016**
(21) Anmeldenummer: 11709627.1
(22) Anmeldetag: 21.01.2011
(51) Int. Cl.: A23C 3/037, A23L 3/16, A23L 3/18, A23L 3/22

(54) **VERFAHREN UND UHT-ANLAGE ZUR BEHANDLUNG HITZEEMPFINDLICHER FLÜSSIGER NAHRUNGSMITTELPRODUKTE**
METHOD AND UHT INSTALLATION FOR TREATING HEAT-SENSITIVE LIQUID FOOD PRODUCTS
PROCÉDÉ ET INSTALLATION UHT POUR LE TRAITEMENT DE PRODUITS ALIMENTAIRES LIQUIDES SENSIBLES À LA CHALEUR

(30) Priorität: 18.02.2010 DE 102010008448
(43) Veröffentlichungstag der Anmeldung: 26.12.2012
(73) Patentinhaber: GEA TDS GmbH, 31157 Sarstedt (DE)
(72) Erfinder: KOWALIK, Manfred, 48712 Gescher (DE); TACKE, Ludger, 46342 Velen (DE); LEIWERING, Ludger, 48366 Laer (DE); SCHWENZOW, Uwe, 48683 Ahaus (DE); ZIMMERMANN, Dietrich, 96148 Baunach (DE)
(74) Vertreter: Eisenführ Speiser
(86) Internationale Anmeldenummer: PCT/EP2011/000247
(87) Internationale Veröffentlichungsnummer: WO 2011/101077

(56) Entgegenhaltungen:
- EP-A1- 0 794 706
- WO-A1-02/060281
- US-A1- 2006 237 859
- US-A1- 2006 286 233
- ANONYMOUS: "The microbiologically safe continuous-flow thermal sterilization of liquid foods", Trends in food Science & Technology, Bd. 4 April 1993 (1993-04), Seiten 115-121, XP002634794, Online Gefunden im Internet: URL:www.food-info.net/uk/eng/docs/doc6.pdf [gefunden am 2011-04-29]
- BURTON H ED - BURTON H: "ULTRA-HIGH-TEMPERATURE PROCESSING OF MILK AND MILK PRODUCTS, PASSAGE", 1. Januar 1998 (1998-01-01), ULTRA HIGH TEMPERATURE PROCESSING OF MILK AND MILK SOLIDS, BARKING, ELSEVIER APPLIED SCIENCE, GB, PAGE(S) 101 - 111, XP002071864, Seite 107, Absatz 1 - Seite 109, Absatz 1 Seite 109, Absatz 4 - Seite 110, Absatz 2 & Burton, H.: "Ultra-high-temperature processing of milk and milk products", 1988, Elsevier Applied Science Publishers Ltd, London and New York ISBN: 1-85166-170-0 Seiten 111-114, Seite 112, Absatz 2 - Seite 113, Absatz 2; Abbildung 4.18 Seite 114, Absatz 2

## Beschreibung

### TECHNISCHES GEBIET

Die Erfindung betrifft ein Verfahren zur Behandlung hitzeempfindlicher flüssiger Nahrungsmittelprodukte, bei dem Wasserdampf das flüssige Nahrungsmittelprodukt zur Bildung eines keimfreien Zustands direkt erhitzt, ein erhitztes Nahrungsmittelprodukt eine definierte und kontrollierte Verweilzeit heißgehalten wird und bei dem einem heißgehaltenen Nahrungsmittelprodukt anschließend durch Entspannung auf einen niedrigeren Druck Wasser in einer Menge, die jener des zuvor zugeführten Wasserdampfes entspricht, entzogen wird. Darüber hinaus betrifft die Erfindung eine UHT-Anlage zur Durchführung des Verfahrens der vorstehend beschriebenen Gattung.

### STAND DER TECHNIK

Die von der vorliegenden Erfindung umfasste Behandlung hitzeempfindlicher flüssiger Nahrungsmittelprodukte dient der Verlängerung der Lagerbeständigkeit dieser Nahrungsmittelprodukte und ist ein bekanntes und häufig angewendetes Verfahren. Die Wärmebehandlung mittels des Heizmediums Wasserdampf (vorzugsweise Sattdampf, aber auch in überhitztem Zustand) kann mit den unterschiedlichsten Verfahren, entweder direkt oder indirekt, erfolgen ([1], Heinz-Gerhard KESSLER, Lebensmittel-Verfahrenstechnik, Schwerpunkt Molkereitechnologie, 1. Auflage, München - Weihenstephan, Verlag A. Kessler, 1976, S. 154 bis 159).

Zu den indirekten Verfahren zählt beispielsweise das Erwärmen unter Verwendung verschiedener Wärmeaustauscherausführungen (Rohrbündel-Wärmeaustauscher; Platten-Wärmeaustauscher). Die direkten Verfahren umfassen zwei Hauptgruppen, nämlich das Injektionsverfahren mittels Wasserdampf **([1],** S. 154, 155) und das Infusionsverfahren mittels Wasserdampf **([1],** S. 156).

Durch den unmittelbaren Wärmeaustausch zwischen dem Wasserdampf und dem flüssigen Nahrungsmittelprodukt wird dieses unmittelbar, schnell und effizient erwärmt. Infolge dieses schnellen Verfahrens kann die Behandlungszeit verringert werden, was insgesamt zu einer verringerten Wärmeeinwirkung auf das Nahrungsmittelprodukt führt und wodurch ein diesbezügliches Produkt erhalten wird, das vor allem im Hinblick auf den Geschmack ein höheres Qualitätsniveau behält. Ultrahocherhitzen durch direktes Vermischen von qualitativ einwandfreiem Wasserdampf von Trinkwasserqualität mit dem zu sterilisierenden Milchprodukt erfolgt bei einer Erhitzungstemperatur von ca. 150 °C und über eine Einwirkungsdauer von ca. 2,4 Sekunden (s. hierzu **[1],** Seite 145, Abb. 6.15 und Seite 154). Die Denaturierung der Serumproteine beginnt bereits ab 75 bis 80 °C, wobei die Hauptquelle der freiwerdenden SH-Gruppen das β-Laktoglobulin ist, das bei 130 °C vollständig denaturiert und in der Bildung des Kochgeschmacks ein Maximum erfährt. Ein Vergleich zwischen indirekter und direkter Milcherhitzung zeigt mit Blick auf den denaturierten Anteil des β-Laktoglobulins, dass dieser bei der indirekten Milcherhitzung mit 83 % deutlich höher ist als bei der direkten mit 66 % (s. hierzu [1], Seiten 132, 133). Darüber hinaus sind die Vitaminverluste durch Erhitzen bei schonender Wärmebehandlung, d.h. bei relativ kurzer Erwärmung und Verweilzeit, wie sie bei der Hoch- und Kurzzeiterhitzung gegeben sind, gering. Geringfügig höhere Verluste treten bei der Ultrahocherhitzung auf (s. hierzu **[1],** Seite 133).

Beim Injektionsverfahren wird das zu erwärmende Nahrungsmittelprodukt durch einen Injektor gefördert. Der Dampf wird mit einem höheren Druck zum Zwecke der Erhitzung direkt in das als Treibstrahl fungierende Nahrungsmittelprodukt injiziert und der Wärmeaustausch zwischen den sich mischenden Stoffströmen vollendet sich in einem sog. Mischraum **(**DE 10 2007 017 704 A1**).**

Beim Infusionsverfahren, bei dem die Infusionserwärmung zur Anwendung kommt, wird das feinverteilte Nahrungsmittelprodukt in einer Dampfkammer erwärmt. Der Dampf- und der Produktsystemdruck sind bei diesem Verfahren nahezu identisch. Damit ist die Temperaturdifferenz zwischen dem Erhitzungsmedium und dem Nahrungsmittelprodukt deutlich geringer als beim Injektionsverfahren, mit der Folge einer noch schonenderen Produktbehandlung. Die Nachteile des Infusions- im Vergleich zum Injektionsverfahren bestehen in einer komplizierteren Verfahrenstechnik und in höheren Investitionskosten. Einen Überblick über Verfahrenskonzepte zur Sterilisierung von Nahrungsmittelprodukten, insbesondere auch unter Berücksichtigung direkter Erhitzungsverfahren der vorbeschriebenen Art, geben **[2]** Saskia SCHWERMANN, Uwe SCHWENZOW in "Verfahrenskonzepte zur Herstellung von ESL-Milch", Beitrag in drei Teilen in Deutsche Milchwirtschaft, 11/2008 bis 13/2008 (59. Jg.).

Die schnelle und schonende Wärmebehandlung beim direkten Erwärmungsverfahren wird um den Preis eines höheren Energieaufwandes gegenüber dem indirekten Erwärmungsverfahren erkauft. Gleichwohl hat das direkte Erwärmungsverfahren dann Präferenz, wenn die qualitativen Aspekte des Nahrungsmittelprodukts im Vordergrund stehen. Es sind daher zahlreiche direkte Erhitzungsverfahren bekannt geworden, die nach dem Infusions- oder dem Injektorprinzip arbeiten.

Bei allen vorstehend skizzierten Erhitzungsverfahren, unabhängig davon, ob es sich um eine indirekte oder direkte Erhitzung handelt, kommt es insbesondere im Erhitzerteil und in der nachgeschalteten, nicht von außen beheizten Heißhaltestrecke oder dem nachgeschalteten, nicht von außen beheizten Heißhalter zu mehr oder weniger starken Ablagerungen, die zu Qualitätsproblemen beim Nahrungsmittelprodukt und/oder zu ernsthaften Reinigungsproblemen führen, wobei letztere verlängerte Reinigungszeiten und damit verkürzte Betriebszeiten der UHT-Anlage und besondere Reinigungsverfahren und -mittel erfordern. In jedem Falle muss bei allen Erhitzungsverfahren angestrebt werden, dass das zu behandelnde Nahrungsmittelprodukt, insbesondere im Erhitzerteil und in der Heißhaltung, möglichst der gleichen Verweilzeit unterliegt, da sich unterschiedliche Verweil- und damit Einwirkungszeiten, insbesondere bei hohen Einwirkungstemperaturen, nachteilig in der vorstehend beschriebenen Weise auswirken.

Im Zusammenhang mit den in Rede stehenden Ablagerungen bzw. dem sich bildenden Belag wird in der Literatur auch vom "Fouling" bei der Erhitzung von Milch gesprochen. Auf **BURTON** geht die Klassifizierung des Belages in zwei Typen A und B zurück (s. hierzu **[3]** Dissertation von Johannes PETERMEIER, "Numero-Fuzzy Modell zur Beschreibung des Foulings bei der Erhitzung von Milch", Lehrstuhl für Fluidmechanik und Prozessautomation der Technischen Universität München, 17. April 2003, Seiten 1 bis 11). Typ A besteht vorwiegend aus Proteinen, wobei das vorherrschende Protein das vorstehend erwähnte β-Laktoglobulin ist, und einem Salzanteil, bestehend vorwiegend aus Kalzium und Phosphat. Typ B besteht vorwiegend aus Salzen. Die vorherrschende Meinung ist, dass die Ansatzbildung mit der Denaturierung des β-Laktoglobulins zusammenhängt. Die Ansätze an den heißen Wandungen während der UHT-Erhitzung können durch Vorwärmung der Milch mit gewisser Haltezeit deutlich reduziert werden. Gasanteile in dem zu behandelnden Nahrungsmittelprodukt oder Gasbildung während der Behandlung, insbesondere in der Heißhaltestrecke oder dem Heißhalter, begünstigen die Belagbildung und beeinflussen die Qualität des Produkts.

Die Druckschrift DK 169 248 B1 offenbart eine Anlage für das Sterilisieren von Milch. Eine solche Anlage ist als Direkt-UHT-Anlage (Direkt-UltrahochtemperaturAnlage) bekannt. Bei diesen Anlagen wird die Milch einer sog. Infusionskammer zugeführt und dort in einer solchen Weise in eine Dampfatmosphäre (Wasserdampf) eingeleitet, dass die Milch auf eine Temperatur von ungefähr 140 Grad Celsius erhitzt wird. Anschließend wird die Milch einer sog. Haltekammer zugeführt, in der die Milch über einen vorbestimmten Zeitraum (ungefähr 2 bis 25 Sekunden) in dem erhitzten Zustand gehalten wird. Danach gelangt die Milch zu einer Vakuumkammer, in der das Wasser, das vom Wasserdampf stammt, wieder in einer solchen Weise entfernt wird, dass der Feststoffgehalt der Milch dann, wenn die Milch diese Vakuumkammer verlässt, derselbe ist, wie vor der Zuführung des Wasserdampfes.

Die Verweilzeit und der Temperaturverlauf der erhitzten Milch, beginnend vom Austritt der Infusionskammer bis zum Eintritt in die Vakuumkammer, sind bei der bekannten UHT-Anlage nicht hinreichend vorbestimmt und sie sind nicht einheitlich für alle überführten Milchteilmengen steuerbar, da hierzu die notwendigen Förder- und Steuerungsmittel fehlen und auch diesbezüglich keine Angaben gemacht oder nahegelegt werden. Darüber hinaus führen, wenn sich das Produkt in der Näher der Kochgrenze befindet, mitgeführte Gasanteile und nicht kondensierter Wasserdampf in diesem Bereich zu Auskochungen, zu häufig damit verbundenen Phasentrennungen und dadurch wiederum zu verstärkten Anbrennungen, zur forcierten Belagbildung und zu negativen qualitativen Veränderungen des Produkts.

In der EP 0 794 706 B1 wird ein nicht druckschriftlich belegter Stand der Technik erwähnt und kurz beschrieben, der die vorstehend im Zusammenhang mit der DK 169 248 B1 beschriebenen Nachteile dadurch zu beseitigen sucht, dass die vorstehend erwähnte Haltekammer eine Zentrifugalpumpe umfasst, die mit dem Auslass der Infusionskammer über ein Rohr verbunden ist, wobei diese Zentrifugalpumpe die erhitzte Milch in eine Rohrlänge, die durch ein Expansionsventil verläuft, zu der Vakuumkammer pumpt.

Mit der erwähnten Kreiselpumpe wird eine schnelle Überführung der erhitzten Milch zu der Rohrlänge zwischen der Kreiselpumpe und dem Expansionsventil gewährleistet, wo der tatsächliche Sterilisationsprozess in ein paar Sekunden in dem erhitzten Zustand durchgeführt wird, bevor die Temperatur nach dem Passieren des Expansionsventils schnell abfällt. Eine Kreiselpumpe begünstigt eher eine ungleiche Verweilzeitverteilung als dass sie zu einer Verstetigung der Verweilzeit führt. Zwar lässt sich die Temperatur durch das und bis zu dem Expansionsventil hoch halten. Ein Auskochen des Produkts kann nicht verhindert werden, wenn sich dieses an oder in der Nähe der Kochgrenze befindet. Da die Kreiselpumpe den Druck im System zwischen Kreiselpumpe und Expansionsventil vom Druck vor der Kreiselpumpe und damit in der Infusionskammer nicht wirksam entkoppeln kann, sind der Füllstand und damit die Verweilzeit und die Temperatur im der Kreiselpumpe vorgelagerten Anlagenbereich nicht exakt steuer- und definierbar.

In der vorstehend erwähnten EP 0 794 706 B1 ist eine Anlage zur Behandlung von hitzeempfindlichen fluiden Nahrungsmitteln, wie Molkenproteinkonzentrat und Käsemilch, beschrieben, wobei die Anlage eine Infusionskammer, in der das Fluid durch eine Zuführung von Dampf einer Hitzebehandlung unterzogen wird, und eine damit verbundene Vakuumkammer enthält, um dem Fluid Wasser zu entziehen. Um die erwähnten Nachteile diesbezüglicher Anlagen des Standes der Technik zu beseitigen, ist in der EP 0 794 706 B1 erfindungsgemäß vorgesehen, dass die Auslassöffnung der Infusionskammer direkt mit dem Einlass einer Verdrängerpumpe verbunden ist, und dass der Auslass der Verdrängerpumpe mit dem Einlass der Vakuumkammer auf eine solche Weise verbunden ist, dass während des Betriebs der Anlage "über der Pumpe" ein Druckabfall stattfindet, gesehen in der Strömungsrichtung des Fluids.

Diese Lösung unterscheidet sich zwar grundlegend von der UHT-Anlagen gemäß DK 169 248 B1 oder der in der EP 0 794 706 B1 mit Blick auf den Stand der Technik beschriebenen UHT-Anlage mit Zentrifugalpumpe, da die Heißhaltung des Produkts und die Druckabsenkung vom Druck in der Infusionskammer auf annähernd den Druck in der Vakuumkammer auf dem kurzen Transportweg über die Förderräume des Laufrades der Verdrängerpumpe stattfinden muss (s. **Figur 2** der EP 0 784 706 B1**).** Die Dauer der Heißhaltung wird daher über die Pumpenauslegung bestimmt, wodurch eine einfache variable Anpassung an unterschiedliche Betriebsbedingungen, Verfahrensbedingungen und Nahrungsmittelprodukte erschwert wird. In der Verbindungsleitung zwischen dem Austritt der Verdrängerpumpe und dem Eintritt in die Vakuumkammer kann es durch die Druckabsenkung zur Gasbildung und dadurch zu Phasentrennungen (flüssig/flüssig und/oder flüssig/fest) mit den damit verbundenen negativen qualitativen Veränderungen des Produkts kommen. Da in der Verbindungsleitung unterstromig der Verdrängerpumpe keine strömungsmechanischen Eingriffe mehr erfolgen, ist dort mit unkontrollierten Verweilzeiteffekten zu rechnen, die gleichfalls negative Auswirkungen auf die Qualität und die Foulingbildung haben.

In der Veröffentlichung **[4]** BURTON, H., Ultra-High-Temperature Processing of Milk and Milk Products, London and New York, Elsevier Applied Science Publishers Ltd., 1988, Seiten 111-114, ISBN 1-85166-170-0, ist eine UHT-Anlage beschrieben, mit einer mit Wasserdampf betriebenen Infusionseinrichtung, einem Expansionsbehälter unter dem erforderlichen Vakuum, einer Verbindungsleitung zwischen der Infusionseinrichtung und dem Expansionsbehälter, einer unterstromig der Infusionseinrichtung in der Verbindungsleitung angeordneten Verdrängerpumpe und einem unterstromig der Verdrängerpumpe in der Verbindungsleitung angeordneten Entspannungsventil. Ausweislich der Beschreibung, Seite 112, letzter Absatz, wird das erhitzte Produkt durch den Dampfdruck in der Infusionseinrichtung durch die als Haltestrecke zur Heißhaltung dienende Verbindungsleitung und das sich anschließende Entspannungsventil getrieben. Somit findet zwischen der Infusionseinrichtung und dem Entspannungsventil ein durch Strömungs- und Reibungsverluste bedingter zwangsläufiger Druckabfall statt und die Verdrängerpumpe beschränkt sich darauf, die Haltezeit und den Fluss des Produkts exakt zu regeln.

Die Veröffentlichung von [5] STROUP, W. H., PARKER, R. W., DICHERSON Jr., R. W., Steam Infusion Heater For Ultra High-Temperature Pasteurization, in Journal of Dairy Science, Vol. 55 (1972), Heft 4, Seiten 536-539, beschreibt eine UHT-Anlage mit einer Infusionskammer, einer in deren Austritt angeordneten Steuerpumpe, die im Rahmen des Prozesses in einer sich anschließenden Heißhaltestrecke eine Temperaturkontrolle und eine konstante Verweilzeit sicherstellt, und einer Vakuumkammer, in die die Heißhaltestrecke einmündet. Auf Seite 539, rechte Spalte, Absatz 2, wird hinsichtlich des Druckniveaus in der Infusionskammer und der sich anschließenden Heißhaltestrecke gefordert, dass der Druck innerhalb der Infusionskammer mindestens 0,6 atm oberhalb eines Druckes "psvp" liegen muss, wobei diese Abkürzung für "Product saturation vapor pressure" (Sättigungsdampfdruck des Produkts) steht. Somit findet auch bei dieser bekannten UHT-Anlage zwischen der Infusionskammer und dem stromabwärts gelegenen Ende der Heißhaltestrecke ein durch Strömungs- und Reibungsverluste bedingter zwangsläufiger Druckabfall statt, und die Steuerpumpe beschränkt sich darauf, die Haltezeit und den Fluss des Produkts exakt zu regeln.

Die WO 02/060281 A1 verweist auf einen Stand der Technik, welcher ein Verfahren zur Behandlung eines Produkts, beispielsweise Milch, in einer UHT-Anlage offenbart. Dabei wird eine Zahnradpumpe zwischen der Infusionskammer und der Heißhaltestrecke angeordnet, wobei die Zahnradpumpe einen Druckanstieg bewirkt, der das Auskochen des Produkts verhindern soll. Die WO 02/060281 A1 selbst beschreibt ein Halterohr für eine Wärmebehandlungsanlage mit Wärmeinfusion, wobei ein erster verstellbarer Abschnitt und ein zweiter feststehender Abschnitt vorgesehen sind und letzterer aus einer Rohrleitung mit einer vorgegebenen Länge besteht. Der erste verstellbare Abschnitt besteht aus einer geneigten. Leitung mit einer vorgegebenen Länge, wobei in dieser Leitung eine Vorrichtung wirksam ist, um in dieser Leitung ein definiertes Flüssigkeitsniveau zu halten.

Die US 2006/237859 A1 beschreibt einen Dampfinjektor für pumpbare Nahrungsmittel, wie beispielsweise Milch, wobei der Druck auf das Nahrungsmittel im Injektor vor dem Austritt um 0,5 bis 5,0 bar erhöht und dann in einer sich dem Dampfinjektor anschließenden Drosselscheibe reduziert wird.

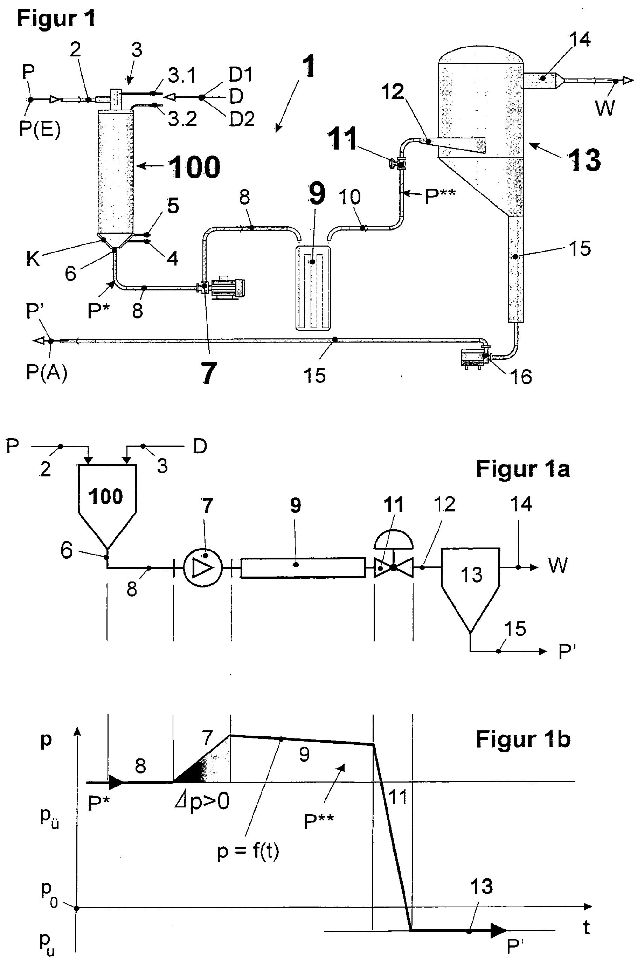

Die Zeitschrift **[6]** Trends in Food Science & Technology, April 1993, Vol. 4, Seiten 115-121, XP-002634794, offenbart in Figur 1 (main diagramm) eine Infusionskammer, die über eine Verbindungsleitung mit einer Vakuumkammer verbunden ist. In dieser Verbindungsleitung sind eine Verdrängerpumpe und ein Entspannungsventil angeordnet. Anstelle der Infusionskammer kann nach Figur 1 (inset) auch ein Injektor angeordnet werden, bei dem Wasserdampf einem als Treibstrahl fungierenden Produkt zuströmt. Es ist weiterhin offenbart, dass in der als Heißhaltestrecke fungierenden Verbindungleitung zur Vermeidung von Sieden und Fouling ein Anstieg des Druckes vorzusehen ist, der über dem Sättigungsdampfdruck des Produkts liegt.

Es ist Aufgabe der vorliegenden Erfindung, bei einer UHT-Anlage, deren grundsätzlicher Aufbau bei Verwendung einer Infusionskammer in der Beschreibungseinleitung der WO 02/060281 A1 beschrieben ist, für das gesamte behandelte Nahrungsmittelprodukt unterstromig eines Austritts einer Einrichtung, in der das Nahrungsmittelprodukt durch eine Zufuhr von Wasserdampf einer Direkterhitzung unterzogen wird, gleiche und gleichbleibende Verweilzeit sowie einen gleichen und gleichbleibenden Temperaturverlauf sicherzustellen und das Fouling bei der Heißhaltung des Nahrungsmittelprodukts in diesem Bereich zu minimieren. Darüber hinaus ist es Ziel der Erfindung, eine UHT-Anlage zur Durchführung des erfindungsgemäßen Verfahrens anzugeben.

### ZUSAMMENFASSUNG DER ERFINDUNG

Diese Aufgabe wird durch ein Verfahren mit den Merkmalen des Anspruchs 1 gelöst. Vorteilhafte Ausführungsformen des Verfahrens sind Gegenstand der Unteransprüche 2 bis 4. Eine UHT-Anlage zur Durchführung einer Ausgestaltung des Verfahrens nach Anspruch 4 ist Gegenstand des Anspruchs 5.

Das erfindungsgemäße Verfahren zur Behandlung hitzeempfindlicher flüssiger Nahrungsmittelprodukte in einer UHT-Anlage geht aus von einem an sich bekannten Verfahren, bei dem Wasserdampf das flüssige Nahrungsmittelprodukt zur Bildung eines keimfreien Zustands direkt erhitzt, ein erhitztes Nahrungsmittelprodukt eine definierte und kontrollierte Verweilzeit heißgehalten wird und bei dem einem heißgehaltenen Nahrungsmittelprodukt anschließend durch Entspannung auf einen niedrigeren Druck Wasser in einer Menge, die jener des zuvor zugeführten Wasserdampfes entspricht, entzogen wird.

Die erfindungsgemäße verfahrenstechnische Lösung besteht darin, dass das erhitzte Nahrungsmittelprodukt oberstromig seiner Heißhaltung an einem vorbestimmten, unveränderlichen Ort einen vorbestimmten Druckanstieg erfährt, und dass das Druckniveau oberstromig des Ortes vor der Entspannung über dem Druckniveau oberstromig des Ortes vor dem Druckanstieg liegt.

Durch den vorbestimmten, unveränderlichen Ort werden oberstromig dieses Ortes die Verweilzeitbedingungen eindeutig und über das gesamte behandelte Nahrungsmittelprodukt gleichwirkend festgelegt. Für das unterstromig dieses Ortes behandelte und strömende Nahrungsmittelprodukt bedeutet dies ebenfalls eindeutige und über das gesamte behandelte Nahrungsmittelprodukt gleichwirkend festgelegte Verweilzeitbedingungen sowie erhöhte, gleiche Druckverhältnisse infolge der planmäßigen Druckerhöhung. Im Bereich der Heißhaltung unterliegt das derart behandelte Nahrungsmittelprodukt zwar einem durch die Strömungs- und Reibungsverluste bedingten zwangsläufigen Druckabfall, wie dies bei den bekannten UHT-Anlagen der vorstehend beschriebenen Art ebenfalls unabänderlich gegeben ist, jedoch liegt das Druckniveau, in Strömungsrichtung gesehen, unmittelbar vor der planmäßigen Entspannung immer noch deutlich höher als jenes, von dem der erfindungsgemäße Druckanstieg ausgeht.

Durch den erfindungsgemäßen Druckanstieg wird zum Einen einem Auskochen des Nahrungsmittelprodukts und einer damit verbundene Gasentbindung entgegengewirkt. Zum Anderen werden eine Entgasung nicht gelöster Gasbestandteile und eine Entbindung von nicht kondensiertem Wasserdampf sicher verhindert, zumal sich das Nahrungsmittelprodukt ohne diese Druckerhöhung an oder in der Nähe der Kochgrenze befinden würde.

Es ist bekannt, dass Gasentbindung in der nicht von außen beheizten und sich bis zur vorerwähnten Entspannung erstreckenden sog. Heißhaltung, und hier an den Wandungen der Heißhaltung, zu verstärktem Anbrand des Nahrungsmittelprodukts und Ablagerungen mit deutlich größerer Ablagerungsgeschwindigkeit, dem vorstehend beschriebenen Proteinfouling, führt, die eine Reinigung dieses Bereichs in sehr viel kürzeren Zeitabständen erforderlich machen, als dies der Fälle wäre bei Vermeidung einer diesbezüglichen Gasentbindung.

Erfindungsgemäß hat es sich im Hinblick auf eine Vermeidung der mit dem Auskochen des Nahrungsmittelprodukts verbundenen Gasentbindung als zielführend herausgestellt, wenn der erfindungsgemäße Druckanstieg derart ausgelegt ist, dass das heißgehaltene Nahrungsmittelprodukt oberstromig und unmittelbar vor seiner Entspannung einen Systemdruck aufweist, der mindestens um 1,5 bar über jenem oberstromig des Druckanstiegs liegt.

Zur planmäßigen Druckerhöhung dient die in der UHT-Anlage an sich bereits bekannte Verdrängerpumpe, deren Funktion sich bislang darauf beschränkte, die Haltezeit und den Fluss des Produkts exakt zu regeln. Die Volumenstrom-Druck-Charakteristik einer derartigen Verdrängerpumpe entkoppelt den Systemdruck stromabwärts der Pumpe von jenem stromaufwärts, so dass die Arbeitsbedingungen einer Einrichtung, in der das Nahrungsmittelprodukt durch eine Zufuhr von Wasserdampf einer Direkterhitzung unterzogen wird, nämlich Druck und Volumenstrom, eindeutig definiert sind. Des Weiteren besitzt die Verdrängerpumpe, unabhängig davon, ob sie rotierend oder oszillierend ausgebildet ist, eine mehr oder weniger große selbstreinigende Eigenschaft, wodurch entweder Belagbildung auf den vom Nahrungsmittelprodukt benetzten Wandflächen bereits im Ansatz verhindert oder sich bildende Beläge ständig abgetragen werden.

Das erfindungsgemäße Verfahren findet, wie dies vorgeschlagen wird, vorteilhaft Anwendung auf Molkereiprodukte, wie Milch, Sahne oder Molkenproteinkonzentrat.

Bei der Realisierung des erfindungsgemäßen Verfahrens mittels einer Infusionskammer ist vorgesehen, dass dieser das zu erhitzende flüssige Nahrungsmittelprodukt im oberen Bereich zugeführt und dass aus dieser das erhitzte Nahrungsmittelprodukt im unteren Bereich abgeführt wird. Dabei tritt das Nahrungsmittelprodukt feinverteilt in die Infusionskammer ein und durchsetzt diese als Fallströmung, wobei dem oberen Bereich der Infusionskammer der Wasserdampf zugeführt wird, und wobei über die gesamte Verweilzeit des Nahrungsmittelprodukts in der Infusionskammer dieses in einen Wärmeaustausch mit dem Wasserdampf tritt.

Die verfahrenstechnische Lösung mit einem Injektor stellt auf zwei verschiedene Betriebsweisen ab. Bei der ersten Betriebsweise leitet der Injektor das Heizmedium Wasserdampf in das Nahrungsmittelprodukt ein, wobei das Strömen des Wasserdampfes durch Druckabfall hervorgerufen wird, der durch die Geschwindigkeit des Nahrungsmittelprodukts entsteht. In diesem Falle bildet das Nahrungsmittelprodukt den notwendigen Treibstrahl aus. Die zweite Betriebsweise sieht vor, dass das Nahrungsmittelprodukt in das Heizmedium Wasserdampf eingeleitet wird, wobei das Strömen des Nahrungsmittelprodukts durch Druckabfall hervorgerufen wird, der durch die Geschwindigkeit des Wasserdampfes entsteht. In diesem Falle bildet der Wasserdampf den notwendigen Treibstrahl aus.

Die Anordnung einer Verdrängerpumpe innerhalb der in Rede stehenden UHTAnlage ist jeweils ohne Einschränkung in Kombination mit der vorstehend beschriebenen Infusionskammer oder alternativ mit dem vorstehend beschriebenen Injektor möglich. Ist die Einrichtung als Injektor ausgebildet, wie dies eine vorteilhafte Ausgestaltung der UHT-Anlage vorsieht, dann wird der Druck stromaufwärts der Verdrängerpumpe auf einen vorbestimmten Druck geregelt, wodurch dann auch die Arbeitsbedingungen des Injektor, nämlich Druck des Nahrungsmittelprodukts und jener des Wasserdampfes und, davon abhängig, die Erhitzungstemperatur des Wasserdampfes sowie der durchgesetzte Volumenstrom, eindeutig festgelegt sind. Eine Unterspeisung des Injektors ist unter diesen Bedingungen ausgeschlossen.

Wird die Einrichtung als Infusionskammer ausgeführt, dann stellt sich durch die Charakteristik der Verdrängerpumpe ein konstanter Volumenstrom in der Pumpe und damit gleichermaßen im Austritt der Infusionskammer ein, so dass das Flüssigkeitsniveau in der Infusionskammer auf eine konstante und minimal mögliche Höhe geregelt werden kann. Damit ergibt sich eine minimal mögliche und eindeutig definierte Verweilzeit des Nahrungsmittelprodukts zwischen dem Flüssigkeitsniveau und/oder dem Austritt der Infusionskammer und dem Eintritt in die Verdrängerpumpe und auf dem Weg durch letztere, ohne dass in diesem Bereich die Gefahr unterschiedlicher Verweilzeiten besteht. Eine Unterspeisung der Infusionskammer ist unter diesen Bedingungen ausgeschlossen.

Da bei der UHT-Anlage mit Injektor oder mit Infusionskammer jeweils ein definierter Volumenstrom vorgegeben ist, lässt sich die Verweilzeit des Nahrungsmittelprodukts auf dem relevanten Heißhalteniveau zwischen Verdrängerpumpe und einem Entspannungsventil, das die notwendige Entspannung des heißgehaltenen Nahrungsmittelprodukts bewirkt, ebenso definiert und vorbestimmt über den Durchtrittsquerschnitt und den implementierten und sehr einfach zu verändernden Strömungsweg in diesem Bereich einstellen. Darüber hinaus findet der Temperaturabfall erst im Entspannungsventil statt, wobei letzteres vorteilhaft unmittelbar vor dem Eintritt in eine Vakuumkammer angeordnet ist und sich somit Entgasungseffekte nicht mehr nachteilig in der Leitung, sondern in der hierfür vorgesehenen Vakuumkammer vollziehen.

Die Gefahr der Gasentbindung der vorbeschriebenen Art ist bei der Injektorlösung deutlich größer als bei der Infusorlösung, da über die Infusionskammer, im Gegensatz zum Injektor, bereits eine notwendige, aber ggf. nicht hinreichende Entgasung stattfinden kann.

Eine UHT-Anlage zur Durchführung einer Ausgestaltung des erfindungsgemäßen Verfahrens nach Anspruch 4, bei dem ein Injektor vorgesehen ist zum Einleiten des Nahrungsmittelprodukts in das Heizmedium Wasserdampf, wobei das Strömen des Nahrungsmittelprodukts durch Druckabfall hervorgerufen wird, der durch die Geschwindigkeit des Wasserdampfes entsteht, besteht in an sich bekannter Weise aus dem Injektor, in dem das Nahrungsmittelprodukt durch eine Zufuhr von Wasserdampf einer Direkterhitzung unterzogen wird, einer Vakuumkammer mit dem erforderlichen Vakuum, in der dem Nahrungsmittelprodukt Wasser entzogen wird, einem Austritt aus dem Injektor, der mit einem Eintritt der Vakuumkammer über eine Verbindungsleitung für das Nahrungsmittelprodukt verbunden ist, einer unterstromig des Injektors in der Verbindungsleitung angeordneten ersten Fördereinrichtung, die als Verdrängerpumpe ausgebildet ist, und einem unterstromig der ersten Fördereinrichtung in der Verbindungsleitung angeordneten Entspannungsventil.

Bei der Verdrängerpumpe wird vorzugsweise eine rotierende eingesetzt, die beispielsweise als Zahnrad-, Flügelzellen-, Schraubenrad-, Impeller- oder Drehkolbenpumpe ausgebildet sein kann. Oszillierend arbeitende Verdrängerpumpen sind grundsätzlich ebenfalls einsetzbar, wenn die durch den oszillatorischen Betrieb bedingten Volumenstromschwankungen durch geeignete Mittel ausgeglichen werden oder im Behandlungsprozess keine Rolle spielen.

Um die notwendige Heißhaltung des Nahrungsmittelprodukts planmäßig und eindeutig zu bemessen, ist die Verbindungsleitung im Bereich zwischen der ersten Fördereinrichtung, der Verdrängerpumpe, und dem Entspannungsventil als Heißhaltestrecke ausgebildet ist. Alternativ hierzu ist in der Verbindungsleitung im Bereich zwischen der Verdrängerpumpe und dem Entspannungsventil ein Heißhalter angeordnet.

Um das direkt erhitzte Nahrungsmittelprodukt so schnell wie möglich in den Bereich des erhöhten Druckes zu überführen, mündet gemäß einer vorteilhaften Ausgestaltung der Austritt des Injektors oder der Infusionskammer unmittelbar in die Verdrängerpumpe ein.

Hinsichtlich der Infusionskammer ist an sich bekannt, dass in deren oberen Bereich ein Einlass für das Nahrungsmittelprodukt einmündet, dass aus deren unteren Bereich in einem sich verjüngenden Boden der Austritt ausmündet und dass die Infusionskammer in dem oberen Bereich einen Wasserdampf-Einlass für das Heizmedium Wasserdampf aufweist.

Wird ein Injektor zur direkten Erhitzung des Nahrungsmittelprodukts vorgesehen, dann sind diesbezüglich zwei Ausgestaltungen gegeben. Die eine, die an sich bekannte, ist mit einem Einlass zum Einleiten des Nahrungsmittelprodukts, mit einem Wasserdampf-Einlass zum Einleiten des Wasserdampfs und mit einem Austritt zum Abführen des erhitzten Nahrungsmittelprodukts versehen, wobei der Wasserdampf dem als Treibstrahl fungierenden Nahrungsmittelprodukt zuströmt. Das Heizmedium Wasserdampf wird in das Nahrungsmittelprodukt geleitet, wobei das Strömen des Wasserdampfes durch Druckabfall hervorgerufen wird, der durch die Geschwindigkeit des Nahrungsmittelprodukts entsteht. Die andere Ausgestaltung kehrt erfindungsgemäß diese Verhältnisse sinngemäß um, indem das Nahrungsmittelprodukt in das Heizmedium Wasserdampf eintritt und das Strömen des Nahrungsmittelprodukts durch Druckabfall hervorgerufen wird, der durch die Geschwindigkeit des Wasserdampfes entsteht. Diese Ausgestaltung ist mit einem Einlass zum Einleiten des Wasserdampfs, mit einem Produkt-Einlass zum Einleiten des Nahrungsmittelprodukts und mit einem Austritt zum Abführen des erhitzten Nahrungsmittelprodukts versehen, wobei das Nahrungsmittelprodukt dem als Treibstrahl fungierenden Wasserdampf zuströmt.

### KURZBESCHREIBUNG DER ZEICHNUNGEN

Eine eingehendere Darstellung ergibt sich aus der folgenden Beschreibung und den beigefügten Figuren der Zeichnung sowie aus den Ansprüchen. Während die Erfindung in den verschiedensten Verfahrensvarianten und Ausführungsformen der UHT-Anlage zur Durchführung des Verfahrens realisiert ist, werden in der Zeichnung jeweils ein bevorzugtes Ausführungsbeispiel von zwei grundsätzlich sich unterscheidenden Ausführungsformen der vorgeschlagenen UHT-Anlage dargestellt und nachfolgend nach Aufbau und der jeweils damit durchführbaren Verfahrensvariante sowie hinsichtlich der jeweils realisierten Druckverläufe beschrieben. Es zeigen
- **Figur 1**: in figürlicher Darstellung eine erste Ausführungsform der UHT-Anlage zur Durchführung des Verfahrens gemäß der Erfindung mit einer oberstromig einer Verdrängerpumpe angeordneten Infusionskammer und einem unterstromig der Verdrängerpumpe angeordneten Entspannungsventil;
- **Figur 1a**: in schematischer Darstellung die UHT-Anlage gemäß **Figur 1****;**
- **Figur 1b**: einen qualitativen Druck-Zeit-Verlauf in einer Zuordnung zur Darstellung gemäß **Figur 1** **a;**
- **Figur 2**: in figürlicher Darstellung eine zweite Ausführungsform der UHT-Anlage zur Durchführung des Verfahrens gemäß der Erfindung mit einem oberstromig einer Verdrängerpumpe angeordneten Injektor und einem unterstromig der der Verdrängerpumpe angeordneten Entspannungsventil;
- **Figur 2a**: in schematischer Darstellung die UHT-Anlage gemäß **Figur 2** und
- **Figur 2b**: einen qualitativen Druck-Zeit-Verlauf in einer Zuordnung zur Darstellung gemäß **Figur 2a****.**

### DETAILLIERTE BESCHREIBUNG

Eine UHT-Anlage 1 in einer ersten Ausführungsform **(****Figuren 1, 1a, 1b****)** besteht im Rahmen der zu beschreibenden Erfindung im Wesentlichen aus einer Infusionskammer 100, einer ersten Fördereinrichtung 7, die als Verdrängerpumpe, vorzugsweise als rotierende, ausgebildet und in einem ersten Leitungsabschnitt 8 einer von einem Austritt 6 der Infusionskammer 100 zu einem Eintritt 12 einer Vakuumkammer13 führenden Verbindungsleitung 8/10 angeordnet ist. Die Verdrängerpumpe 7 fördert ein zu behandelndes Nahrungsmittelprodukt P, insbesondere ein hitzeempfindliches flüssiges, von der Infusionskammer 100 zur Vakuumkammer 13. Die Infusionskammer 100 ist dafür vorgesehen, um das Nahrungsmittelprodukt P durch eine Zufuhr von Wasserdampf D, vorzugsweise als Sattdampf oder aber auch als Heißdampf, einer Direkterhitzung zu unterziehen.

Das zu behandelnde Nahrungsmittelprodukt P tritt als eintretender Produktstrom P(E) im oberen Bereich der Infusionskammer 100 über einen Einlass 2 ein. Ebenfalls im oberen Bereich der Infusionskammer 100 befindet sich ein WasserdampfEinlass 3 zur Zufuhr des Wasserdampfes D. Im Ausführungsbeispiel besteht der Wasserdampf-Einlass 3 aus einem ersten Wasserdampf-Einlass 3.1, der einen Teil des zugeführten Wasserdampfes D als erster Wasserdampf D1 dem Zentrum der Infusionskammer 100 von oben her zuführt und dort als freien Kernstrahl austreten lässt. Der andere Teil des zugeführten Wasserdampfes D wird als zweiter Wasserdampf D2 über einen zweiten Wasserdampf-Einlass 3.2 gleichfalls der Infusionskammer 100 von oben her über eine Vielzahl von Eintrittsöffnungen, die in Form wenigstens eines ringförmigen Kranzes angeordnet sind, im radial außenseitigen Bereich in der Nähe des Mantels der Infusionskammer 100 ebenfalls in Form von Freistrahlen zugeführt. Der eintretende Produktstrom P(E) mündet ebenfalls von oben her in die Infusionskammer 100 aus, wobei er den Kernstrahl des ersten Wasserdampfes D1 ringförmig umschließt und seinerseits vom austretenden zweiten Wasserdampf D2 ringförmig umschlossen wird. Das in Form von feinen Tröpfchen oder als Film verteilte Nahrungsmittelprodukt P durchsetzt die Infusionskammer 100 als Fallströmung, tritt auf dem Weg bis zum Austritt 6 in einen Wärmeaustausch mit dem Wasserdampf D1 und D2 und verlässt den Austritt 6 als erhitztes Nahrungsmittelprodukt P*. Der Austritt 6 mündet im unteren Bereich der Infusionskammer 100 aus einem sich nach unten verjüngenden Bodenteil aus, der mit einem Kühlmitteleintritt 4 und einem Kühlmittelaustritt 5 zur Beaufschlagung mit einem Kühlmittel K versehen ist.

Zur Vereinheitlichung der Verweilzeit zwischen dem Austritt 6 und einem saugseitigen Eintritt der Verdrängerpumpe 7 ist es von Vorteil, wenn der Austritt 6 unmittelbar in die Verdrängerpumpe 7 einmündet.

Vorzugsweise unmittelbar oberstromig des Eintritts 12 der Vakuumkammer 13 ist in einem zweiten Leitungsabschnitt 10 der Verbindungsleitung 8/10, der sich dem ersten Leitungsabschnitt 8 anschließt, ein Entspannungsventil 11 angeordnet, das auch als Druckhalteventil für einen oberstromig des Entspannungsventils 11 in den Leitungsabschnitten 8, 10 aufrechtzuerhaltenden Systemdruck p fungiert (s. **Figuren 1b, 1a****).** Die Leitungsabschnitte 8, 10 zwischen der Verdrängerpumpe 7 und dem Entspannungsventil 11 können ohne weitere Maßnahmen zur Heißhaltung des erhitzten Nahrungsmittelprodukts P* dienen, das dann als heißgehaltenes Nahrungsmittelprodukt P** seine Druckabsenkung im Entspannungsventil 11 von einem Überdruck p_{ü} auf einen Unterdruck pᵤ, jeweils gegenüber einem momentanen Atmosphärendruck p₀, findet (s. **Figur 1b****)** und in die Vakuumkammer 13, in der dieser Unterdruck pᵤ vorliegt, eintritt.

Die Verbindungsleitung 8/10 ist gemäß einer vorgeschlagenen Ausgestaltung im Bereich zwischen der Verdrängerpumpe 7 und dem Entspannungsventil 11 in an sich bekannter Weise als spezielle Heißhaltestrecke 9 ausgeführt oder es ist alternativ dort ein an sich bekannter Heißhalter 9 angeordnet.

Die Vakuumkammer 13 ist dazu ausgebildet, um dem sich durch die Druckabsenkung im Entspannungsventil 11 abkühlenden heißgehaltenen Nahrungsmittelprodukt P** jene Menge Wasser W als sog. Brüdendampf zu entziehen, die in Form von Wasserdampf D bzw. D1, D2 der Infusionskammer 100 zugeführt wird, und über einen vorzugsweise im oberen Bereich angeordneten Brüdenaustritt 14 abzuleiten. Ein derart konzentriertes behandeltes Nahrungsmittelprodukt P' verlässt die Vakuumkammer 13 über eine vorzugsweise im unteren Bereich an einem sich verjüngenden Boden angeordnete Abführleitung 15 auf dem Weg über eine zweite Fördereinrichtung 16, die vorzugsweise als Zentrifugalpumpe ausgebildet ist, und wird als austretender Produktstrom P(A) einem stromabwärtigen, nicht dargestellten Bereich der UHT-Anlage 1 zugeführt.

Der erfinderische Grundgedanke, nämlich dass im Zusammenwirken der Verdrängerpumpe 7 mit der Verbindungsleitung 8/10 und dem Entspannungsventil 11 während des Betriebs der UHT-Anlage 1 über und mittels der Verdrängerpumpe 7, in Strömungsrichtung des Nahrungsmittelprodukts P bzw. P*, P** gesehen, ein Druckanstieg Δp auf den Überdruck p_{ü} gegenüber dem momentanen Atmosphärendruck p₀ stattfindet, wird in **Figur 1b****,** in der auf der Ordinate der Systemdruck p und auf der Abszisse die Zeit t (Zeitachse) aufgetragen ist (p = f(t)), bildlich verdeutlicht. Dieser Druckanstieg Δp, bei dem es sich um eine positive Druckänderung Δp > 0, also um eine Druckerhöhung gegenüber dem oberstromig der Verdrängerpumpe 7 herrschenden Systemdruck p handelt, wirkt in Richtung der in **Figur 1b** als Abszisse dargestellten Zeitachse t und damit in Richtung des Strömungsweges des Nahrungsmittelprodukts P*, P** fort.

Das durch die Verdrängerpumpe 7 geschaffene Druckniveau p = f(t) wird allenfalls durch den sich im Bereich der weiteren UHT-Anlage 1 bis zum Entspannungsventil 11 ergebenden, durch die vorliegenden Strömungs- und Reibungswiderstände bedingten zwangsläufigen Druckverlust reduziert. Der sich zwischen Verdrängerpumpe 7 und Entspannungsventil 11 einstellende Systemdruck p = f(t) bleibt in jedem Falle oberhalb des Druckniveaus, das unmittelbar unterstromig der Infusorkammer 100 bzw. oberstromig der Verdrängerpumpe 7 vorliegt, und damit deutlich oberhalb der Kochgrenze des heißgehaltenen Nahrungsmittelprodukts P**. Im Entspannungsventil 11 findet anschließend eine Druckabsenkung auf den in der Vakuumkammer 13 herrschenden Unterdruck pᵤ gegenüber dem Atmosphärendruck p₀ statt.

Es hat sich als besonders vorteilhaft herausgestellt, wenn der Druckanstieg Δp in der Verdrängerpumpe 7 derart ausgelegt ist, dass das heißgehaltene Nahrungsmittelprodukt P** oberstromig und unmittelbar vor seiner Entspannung in dem Entspannungsventil 11, vorzugsweise unmittelbar an dessen Eingang, einen Systemdruck p aufweist, der mindestens um 1,5 bar über jenem oberstromig des Druckanstiegs Δp liegt.

Durch die vorstehend beschriebenen Vorrichtungsmerkmale der UHT-Anlage 1 in der ersten Ausführungsform ist das erfindungsgemäße Verfahrensmerkmal realisierbar, das darin besteht, dass das erhitzte Nahrungsmittelprodukt P* vor seiner Heißhaltung, in Strömungsrichtung gesehen, an einem vorbestimmten, unveränderlichen Ort einen vorbestimmten Druckanstieg Δp mit der vorstehend beschriebenen Zielsetzung erfährt. Dieser Ort befindet sich, unabhängig von Schwankungen der Betriebsbedingungen und bedingt durch die spezielle Verdrängerpumpen-Charakteristik, die eine Entkopplung der Systemdrücke p oberstromig und unterstromig der Verdrängerpumpe 7 bewirkt, unveränderlich an dem saugseitigen Eintritt der Verdrängerpumpe 7 und damit, wegen der vorzugsweise engen und unmittelbaren Anbindung letzterer an die Infusionskammer 100, auch am Austritt 6.

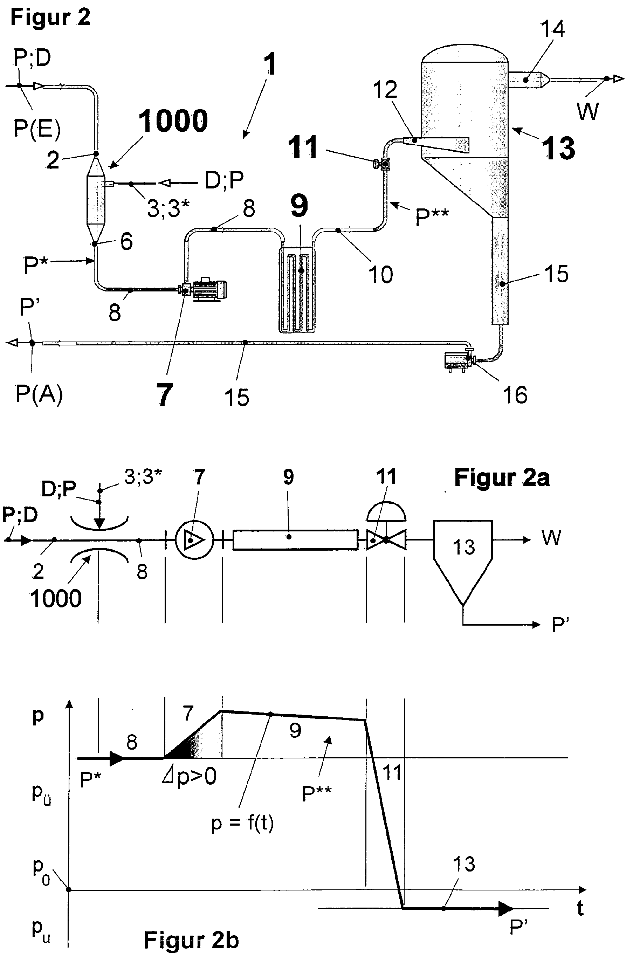

Eine zweite Ausführungsform der UHT-Anlage 1 **(****Figuren 2, 2a, 2b****)** unterscheidet sich von der ersten gemäß den **Figuren 1, 1a und 1b** dadurch, dass die Einrichtung, in der das zu behandelnde Nahrungsmittelprodukt P durch eine Zufuhr von Wasserdampf D einer Direkterhitzung unterzogen wird, nunmehr als Injektor 1000 ausgebildet ist. Die übrigen Bestandteile der UHT-Anlage 1 gemäß **Figur 1** sind, soweit sie nicht unmittelbar zur Infusionskammer 100 gehören, mit identischer Ausführung auf die zweite Ausführungsform zu übertragen und entfalten dort sinngemäß die gleiche Wirkung. Auf eine diesbezügliche Beschreibung wird daher verzichtet.

Der Injektor 1000 besitzt in einer ersten Ausgestaltung einerseits einen Einlass 2 zum Einleiten des zu behandelnden Nahrungsmittelprodukts P, das ihn andererseits an einem Austritt 6 als erhitztes Nahrungsmittelprodukt P* verlässt. Über einen Wasserdampf-Einlass 3 wird der zur Direktbeheizung erforderliche Wasserdampf D zugeführt, wobei der Wasserdampf D dem als Treibstrahl fungierenden Nahrungsmittelprodukt P zuströmt. Diese erste Ausgestaltung zeichnet sich demnach dadurch aus, dass das Heizmedium Wasserdampf D in das Nahrungsmittelprodukt P eingeleitet und das Strömen des Wasserdampfes D durch Druckabfall hervorgerufen wird, der durch die Geschwindigkeit des Nahrungsmittelprodukts P entsteht.

Die zweite Ausgestaltung des Injektors 1000 zeichnet sich dadurch aus, dass das Nahrungsmittelprodukt P erfindungsgemäß in das Heizmedium Wasserdampf D eintritt und das Strömen des Nahrungsmittelprodukts P durch Druckabfall hervorgerufen wird, der durch die Geschwindigkeit des Wasserdampfes D entsteht. Hierzu ist der Injektor 1000 mit einem Einlass 2 zum Einleiten des Wasserdampfs D, mit einem Produkt-Einlass 3* zum Einleiten des Nahrungsmittelprodukts P und mit einem Austritt 6 zum Abführen des erhitzten Nahrungsmittelprodukts P* versehen, wobei das Nahrungsmittelprodukt P dem als Treibstrahl fungierenden Wasserdampf D zuströmt.

Der Druck-Zeit-Verlauf p = f(t) nach **Figur 2b** ist jenem nach **Figur 1b** qualitativ gleich; allenfalls unterscheiden sich die Überdrücke p_{ü} im Injektor 1000 und in der Infusionskammer 100 geringfügig voneinander. Wesentlich ist bei der zweiten Ausführungsform der UHT-Anlage 1 wiederum, dass im Zusammenwirken der Verdrängerpumpe 7 mit der Verbindungsleitung 8/10 und dem Entspannungsventil 11 während des Betriebs der UHT-Anlage 1 über und mittels der Verdrängerpumpe 7, in Strömungsrichtung des Nahrungsmittelprodukts P gesehen, ein Druckanstieg Δp > 0 mit der vorstehend beschriebenen Zielsetzung stattfindet.

### BEZUGSZEICHENLISTE DER VERWENDETEN ABKÜRZUNGEN

- 1: UHT-Anlage
- 100: Infusionskammer
- 1000: Injektor

| Infusionskammer 100 | | Injektor 1000 | |
|---|---|---|---|
| 2 | Einlass (für das Nahrungsmittelprodukt P) | 2 | Einlass (für das Nahrungsmittelprodukt P oder den Wasserdampf D) |
| 3 | Wasserdampf-Einlass | | |
| 3.1 | erster Wasserdampf-Einlass | 3 | Wasserdampf-Einlass |
| 3.2 | zweiter Wasserdampf-Einlass | 3* | Produkt-Einlass |

- 4: Kühlmitteleintritt
- 5: Kühlmittelaustritt

- 6: Austritt
- 7: erste Fördereinrichtung (z.B. rotierende Verdrängerpumpe, wie z.B. Zahnrad-, Flügelzellen-, Schraubenrad-, Impellerpumpe; oszillierende Verdrängerpumpe)

- 8/10: Verbindungsleitung
- 8: erster Leitungsabschnitt
- 10: zweiter Leitungsabschnitt

- 9: Heißhalter/Heißhaltestrecke
- 11: Entspannungsventil/Druckhalteventil
- 12: Eintritt
- 13: Vakuumkammer
- 14: Brüdenaustritt
- 15: Abführleitung (behandeltes Nahrungsmittelprodukt P')
- 16: zweite Fördereinrichtung

- D: Wasserdampf (vorzugsweise als Satt- oder Heißdampf)
- D1: erster Wasserdampf (vorzugsweise als Satt- oder Heißdampf)
- D2: zweiter Wasserdampf (vorzugsweise als Satt- oder Heißdampf)

- K: Kühlmittel

- P: zu behandelndes Nahrungsmittelprodukt
- P': behandeltes Nahrungsmittelprodukt
- P*: erhitztes Nahrungsmittelprodukt
- P**: heißgehaltenes Nahrungsmittelprodukt

- P(A): austretender Produktstrom
- P(E): eintretender Produktstrom

- W: Wasser

- p: Systemdruck, allgemein (Druckachse)
- P₀: Atmosphärendruck
- Pᵤ: Unterdruck
- P_{ü}: Überdruck
- Δp: Druckänderung, allgemein
- Δp > 0: Druckanstieg (positive Druckänderung)

- t: Zeit (Zeitachse)

## Patentansprüche

1. Verfahren zur Behandlung hitzeempfindlicher flüssiger Nahrungsmittelprodukte (P) in einer Anlage zur Ultrahocherhitzung (UHT-Anlage) (1), bei dem Wasserdampf (D) das flüssige Nahrungsmittelprodukt (P) zur Bildung eines keimfreien Zustands direkt erhitzt, ein erhitztes Nahrungsmittelprodukt (P*) eine definierte und kontrollierte Verweilzeit heißgehalten wird und bei dem einem heißgehaltenen Nahrungsmittelprodukt (P**) anschließend durch Entspannung auf einen niedrigeren Druck Wasser (W) in einer Menge, die jener des zuvor zugeführten Wasserdampfes (D) entspricht, entzogen wird, **dadurch gekennzeichnet,**
• **dass** das erhitzte Nahrungsmittelprodukt (P*) oberstromig seiner Heißhaltung an einem vorbestimmten, unveränderlichen Ort einen vorbestimmten Druckanstieg (Δp) erfährt,
• **dass** das Druckniveau oberstromig des Ortes vor der Entspannung über dem Druckniveau oberstromig des Ortes vor dem Druckanstieg (Δp) liegt,
• **dass** der Druckanstieg (Δp) derart ausgelegt ist, dass das heißgehaltene Nahrungsmittelprodukt (P**) oberstromig und unmittelbar vor seiner Entspannung und nach einem durch die Strömungs- und Reibungsverluste in der Heißhaltung bedingten Druckabfall einen Systemdruck (p) aufweist, der mindestens um 1,5 bar über jenem oberstromig des Druckanstiegs (Δp) liegt, und
• **dass** der Systemdruck (p) stromabwärts des Druckanstiegs (Δp) von jenem stromaufwärts entkoppelt ist.

2. Verfahren nach Anspruch 1,
**dadurch gekennzeichnet,**
**dass** das Nahrungsmittelprodukt (P) ein Molkereiprodukt ist.

3. Verfahren nach Anspruch 1 oder 2,
**dadurch gekennzeichnet,**
**dass** eine Infusionskammer (100) vorgesehen ist, der das zu erhitzende flüssige Nahrungsmittelprodukt (P) im oberen Bereich zugeführt und aus der das erhitzte Nahrungsmittelprodukt (P*) im unteren Bereich (2c) abgeführt wird, wobei das Nahrungsmittelprodukt (P) feinverteilt in die Infusionskammer (100) eintritt und diese als Fallströmung durchsetzt, wobei dem oberen Bereich der Infusionskammer (100) der Wasserdampf (D) zugeführt wird, und wobei über die gesamte Verweilzeit des Nahrungsmittelprodukts (P) in der Infusionskammer (100) dieses in einen Wärmeaustausch mit dem Wasserdampf (D) tritt.

4. Verfahren nach Anspruch 1 oder 2,
**dadurch gekennzeichnet,**
**dass** ein Injektor (1000) vorgesehen ist zum Einleiten entweder
• des Heizmediums Wasserdampf (D) in das Nahrungsmittelprodukt (P), wobei das Strömen des Wasserdampfes (D) durch Druckabfall hervorgerufen wird, der durch die Geschwindigkeit des Nahrungsmittelprodukts (P) entsteht,
oder
• des Nahrungsmittelprodukts (P) in das Heizmedium Wasserdampf (D), wobei das Strömen des Nahrungsmittelprodukts (P) durch Druckabfall hervorgerufen wird, der durch die Geschwindigkeit des Wasserdampfes (D) entsteht.

5. UHT-Anlage (1) zur Durchführung des Verfahrens nach Anspruch 4,
bei dem ein Injektor (1000) vorgesehen ist zum Einleiten des Nahrungsmittelprodukts (P) in das Heizmedium Wasserdampf (D), wobei das Strömen des Nahrungsmittelprodukts (P) durch Druckabfall hervorgerufen wird, der durch die Geschwindigkeit des Wasserdampfes (D) entsteht, mit dem Injektor (1000), in dem das Nahrungsmittelprodukt (P) durch eine Zufuhr von Wasserdampf (D) einer Direkterhitzung unterzogen wird, mit einer Vakuumkammer (13), in der dem Nahrungsmittelprodukt (P) Wasser (W) entzogen wird, mit einem Austritt (6) aus dem Injektor (1000), der mit einem Eintritt (12) der Vakuumkammer (13) über eine Verbindungsleitung (8/10) für das Nahrungsmittelprodukt (P) verbunden ist, mit einer unterstromig des Injektors (1000) in der Verbindungsleitung (8/10) angeordneten ersten Fördereinrichtung (7), die als Verdrängerpumpe ausgebildet ist, und mit einem unterstromig der ersten Fördereinrichtung (7) in der Verbindungsleitung (8/10) angeordneten Entspannungsventil (11),
**dadurch gekennzeichnet,**
**dass** der Injektor (1000) einen Einlass (2) zum Einleiten des Wasserdampfs (D), einen Produkt-Einlass (3*) zum Einleiten des Nahrungsmittelprodukts (P) und einen Austritt (6) zum Abführen des erhitzten Nahrungsmittelprodukts (P*) aufweist, wobei das Nahrungsmittelprodukt (P) dem als Treibstrahl fungierenden Wasserdampf (D) zuströmt.

## Claims

1. A method for the treatment of heat-sensitive liquid food products (P) in an installation for ultra-high-temperature processing (UHT installation) (1), in which steam (D) directly heats the liquid food product (P) to form a germ-free state, a heated food product (P*) is kept hot for a defined and controlled residence time, and in which water (W) in a quantity which corresponds to that of the steam (D) previously supplied is then removed from a food product (P**) which has been kept hot by pressure relief to a lower pressure,
**characterised in that**
• the heated food product (P*) upstream from where it is kept hot is subjected to a predetermined pressure increase (Δp) at a predetermined, unchangeable location,
• the pressure level upstream from the location prior to the pressure relief is above the pressure level upstream from the location prior to the pressure increase (Δp),
• the pressure increase (Δp) is designed such that the food product (P**) which is kept hot, upstream and immediately prior to it undergoing pressure relief and after a pressure drop determined by the flow losses and friction losses in the keeping-hot stage, has a system pressure (p) which is at least 1.5 bar greater than that upstream from the pressure increase (Δp), and
• the system pressure (p) downstream from the pressure increase (Δp) is decoupled from that upstream.

2. A method according to Claim 1,
**characterised in that**
the food product (P) is a dairy product.

3. A method according to Claim 1 or 2,
**characterised in that**
an infusion chamber (100) is provided, to the upper region of which the liquid food product (P) which is to be heated is supplied and from which the heated food product (P*) is discharged in the lower region (2c), the food product (P) entering the infusion chamber (100) in a finely divided form and passing therethrough as a falling stream, the steam (D) being supplied to the upper region of the infusion chamber (100), and over the entire residence time of the food product (P) in the infusion chamber (100) it enters into a heat exchange with the steam (D).

4. A method according to Claim 1 or 2,
**characterised in that**
an injector (1000) is provided for introducing either
• the heating medium steam (D) into the food product (P), the flow of the steam (D) being caused by the pressure drop which results from the speed of the food product (P),
or
• the food product (P) into the heating medium steam (D), the flow of the food product (P) being caused by the pressure drop which results from the speed of the steam (D).

5. A UHT installation (1) for carrying out the method according to Claim 4,
in which an injector (1000) is provided for introducing the food product (P) into the heating medium steam (D), the flow of the food product (P) being caused by the pressure drop which results from the speed of the steam (D), with the injector (1000) in which the food product (P) is subjected to direct heating by a supply of steam (D), with a vacuum chamber (13), in which water (W) is removed from the food product (P), with an outlet (6) from the injector (1000) which is connected to an inlet (12) of the vacuum chamber (13) via a connecting line (8/10) for the food product (P), with a first conveying means (7) arranged downstream from the injector (1000) in the connecting line (8/10), which means is formed as a positive-displacement pump, and with a relief valve (11) arranged in the connecting line (8/10) downstream from the first conveying means (7),
**characterised in that**
the injector (1000) has an inlet (2) for introducing the steam (D), a product inlet (3*) for introducing the food product (P) and an outlet (6) for discharging the heated food product (P*), the food product (P) flowing to the steam (D), which acts as a driving jet.

## Revendications

1. Procédé de traitement de produits alimentaires liquides sensibles à la chaleur (P) dans une installation pour le chauffage à ultra-haute température (installation UHT) (1), dans lequel de la vapeur d'eau (D) chauffe directement le produit alimentaire liquide (P) afin d'obtenir un état stérile, un produit alimentaire chauffé (P*) est maintenu en température pendant un temps de séjour défini et contrôlé et dans lequel un produit alimentaire maintenu en température (P**) est ensuite prélevé par détente à une pression d'eau inférieure (W) dans une quantité qui correspond à celle de la vapeur d'eau (D) introduite auparavant,
**caractérisé en ce que**
- le produit alimentaire chauffé (P*) subit, en amont de son maintien en température, au niveau d'un lieu prédéterminé et invariable, une augmentation de pression (Δp) prédéterminée,
- le niveau de pression en amont du lieu avant la détente est au-dessus du niveau de pression en amont du lieu avant l'augmentation de pression (Δp),
- l'augmentation de pression (Δp) est conçue de façon à ce que le produit alimentaire maintenu en température (P**) présente, en amont et immédiatement avant sa détente, et après une chute de pression provoquée par les pertes d'écoulement et de friction lors du maintien en température, une pression de système (p), qui se trouve à au moins 1,5 bar au-dessus de la pression en amont de l'augmentation de pression (Δp), et
- la pression de système (p) en aval de l'augmentation de pression (Δp) est découplée de la pression en amont.

2. Procédé selon la revendication 1
**caractérisé en ce que** le produit alimentaire (P) est un produit laitier.

3. Procédé selon la revendication 1 ou 2
**caractérisé en ce qu'**une chambre de perfusion (100) est prévue, dans laquelle est introduit le produit alimentaire liquide (P) à chauffer dans la partie supérieure et de laquelle le produit alimentaire chauffé (P*) est évacué dans la zone inférieure (2c), le produit alimentaire (P) entrant de manière répartie finement dans la chambre de perfusion (100) et traversant celle-ci sous la forme d'un flux de chute, la vapeur d'eau (D) étant introduite dans la partie supérieure de la chambre de perfusion (100) et, pendant tout le temps de séjour du produit alimentaire (P) dans la chambre de perfusion (100), celui-ci effectue un échange de chaleur avec la vapeur d'eau (D).

4. Procédé selon la revendication 1 ou 2
**caractérisé en ce qu'**un injecteur (1000) est prévu pour l'introduction soit
- du fluide de chauffage, la vapeur d'eau (D), dans le produit alimentaire (P), l'écoulement de la vapeur d'eau (D) étant provoqué par une chute de pression produite par la vitesse du produit alimentaire (P),
soit
- du produit alimentaire (P) dans le fluide de chauffage, la vapeur d'eau (D), l'écoulement du produit alimentaire (P) étant provoqué par une chute de pression produite par la vitesse de la vapeur d'eau (D).

5. Installation UHT (1) pour la réalisation du procédé selon la revendication 4, dans lequel un injecteur (1000) est prévu pour l'introduction du produit alimentaire (P) dans le fluide de chauffage, la vapeur d'eau (D), l'écoulement du produit alimentaire (P) étant provoqué par une chute de pression produite par la vitesse de la vapeur d'eau (D), avec l'injecteur (1000), dans lequel le produit alimentaire (P) est soumis à un chauffage direct par l'introduction de vapeur d'eau (D), avec une chambre à vide (13), dans laquelle de l'eau (W) est retirée du produit alimentaire (P), avec une sortie (6) hors de l'injecteur (1000), qui est reliée avec une entrée (12) de la chambre à vide (13) par l'intermédiaire d'une conduite de liaison (8/10) pour le produit alimentaire (P), avec un premier dispositif de convoyage (7), disposé en aval de l'injecteur (1000) dans la conduite de liaison (8/10), qui est conçu comme une pompe de refoulement, et avec une soupape de détente (11) disposée en aval du premier dispositif de convoyage (7) dans la conduite de liaison (8/10),
**caractérisée en ce que**
l'injecteur (1000) comprend une entrée (2) pour l'introduction de la vapeur d'eau (D), une entrée de produit (3*) pour l'introduction du produit alimentaire (P) et une sortie (6) pour l'évacuation du produit alimentaire chauffé (P*), le produit alimentaire (P) se affluant vers la vapeur d'eau (D) servant de fluide propulseur.
